# EUROPEAN PATENT SPECIFICATION

(11) **EP 3 698 447 B1**
(45) Date of publication and mention of the grant of the patent: **07.08.2024**
(21) Application number: 18792538.3
(22) Date of filing: 11.10.2018
(51) Int. Cl.: H02H 3/00, H02H 3/093, H02H 3/44

(54) **SAFETY DEVICE**
SICHERHEITSVORRICHTUNG
DISPOSITIF DE SÉCURITÉ

(30) Priority: 17.10.2017 IT 201700117036
(43) Date of publication of application: 26.08.2020
(73) Proprietor: Fanin, Nereo, 36043 Camisano Vicentino (VI) (IT)
(72) Inventor: Fanin, Nereo, 36043 Camisano Vicentino (VI) (IT)
(74) Representative: Ziliotto, Tiziano
(86) International application number: PCT/IB2018/057876
(87) International publication number: WO 2019/077445

(56) References cited:
- EP-A1- 3 136 527
- US-A- 5 475 609
- US-A1- 2003 125 885
- US-A1- 2017 025 845

## Description

### TECHNICAL FIELD OF THE INVENTION

The present invention concerns a safety device. More specifically, it concerns a device that makes it possible to ensure the safety of one or more pieces of industrial machinery. Even more specifically, the safety device makes it possible to disconnect the piece of machinery from a power and/or water source in case of detection of an abnormal situation that may damage the machine.

### STATE OF THE ART

According to the known art, safety devices for industrial machinery are known, which can detect the presence of a problem and disconnect the machine. For example, using a differential switch, it is possible to detect the presence of a short circuit towards earth and to disconnect the electrical load downstream of the differential switch.

In the industrial field, very expensive pieces of machinery are often used, which can operate without human supervision. For example, in the field of plastic moulding, a moulding press can produce moulded products without any type of supervision. This type of machinery thus offers the advantage that it can work without constant human control, in particular during the night or during weekends, when there is no operator present.

However, the total absence of operators, or a reduced number of operators, such that it is not possible to control all the machines with sufficient frequency, can represent a problem in case of malfunction of the machine and/or in case of malfunction of the power or water source connected to the machine. For example, in case of overvoltage or in case of a voltage drop, the machine may be damaged in an irreversible manner. The same can happen, for example, in case of overpressure in a water supply circuit or, always for example, in case of lack of water supply.

At the same time, constant monitoring of the power and/or water consumption of the machine in many cases makes it possible to identify the presence of problems before the occurrence of potentially very expensive faults in the machine. For example, a use of water resources exceeding the average values can be associated with a small leakage in the machine. If this leakage is detected and repaired as soon as possible, the occurrence of expensive breakages can be avoided. Similar situations can occur also in the case of abnormal power consumption.

The systems known in the art are generally of the static type. More specifically, they make it possible to set predefined levels for electrical and/or hydraulic parameters and to generate alarms, if necessary, in the case where the current value is higher or lower than said predefined levels. However, these are not the ideal solutions, since the operators need to set said predefined parameters for each single piece of machinery and for each use of the same piece of machinery. For example, a given press may have a first power consumption value in a first working day and a second power consumption value, different from the first value, in a second working day. In the moment when a predefined safety level of the static type related to the first power consumption value is set, there is the risk of the safety device disconnecting the machine due to the second power consumption value, which is higher than the first one.

Safety devices according to the prior art are known from documents US 5 475 609 A and US 2003/125885 A1.

Thus, it is an object of the present invention to provide a safety device that overcomes the drawbacks of the known safety devices. More specifically, it is an object of some embodiments of the present invention to provide a safety device which is capable of assessing the condition of a piece of machinery in a dynamic manner and to react consequently. Furthermore, it is an object of some embodiments of the present invention to provide a safety device which is capable of assessing different parameters that can indicate the presence of a malfunction in the machine or of a potentially dangerous situation, or more generally of an abnormal situation in consideration of which it is advantageously preferable to disconnect the machine, for example an approaching storm.

The present invention, as defined by claim 1, concerns a safety device for industrial machinery, comprising: at least one sensor configured so as to detect the presence of an abnormal situation for the industrial machine, at least one cutout element interposed between a power source or a water source and at least one industrial machine, at least one controller connected to the sensor and to the cutout element and configured in such a way as to change the status of the cutout element based on the presence of an abnormal situation detected by the sensor, wherein the sensor comprises an electrical sensor configured so as to measure at least one value, among voltage, current and phase between voltage and current, of an electrical conductor connected between a power source and the at least one industrial machine, the controller being configured in such a way that it records the value measured by the electrical sensor with a predetermined sampling frequency and for a predetermined time interval, wherein the controller is configured in such a way that it identifies a low value and a high value among the recorded values, and wherein the controller is configured in such a way that it changes the status of the cutout element if the value measured by the electrical sensor exceeds the high value and/or is lower than the low value, preferably at least for a predetermined time interval, or wherein the controller is configured in such a way that it changes the status of the cutout element if a variation in the value measured by the electrical sensor exceeds a maximum variation measured during the predetermined time interval.

According to the present invention, it is possible to keep a record of the behaviour of the machine and, in case an anomaly is observed, to provide for disconnecting the machine from the power supply, thus avoiding a possible damage to the machine.

According to the present invention, the low value can be defined as the lowest value measured during the predetermined time interval, preferably reduced by 10%, and/or the high value can be defined as the highest value measured during the predetermined time interval, preferably increased by 10%.

Thanks to this embodiment, it is possible to prevent any small variation, preferably lower than 10%, with respect to the low value or the high value from activating the system.

In some embodiments, the predetermined time interval can be at least 10ms, preferably at least 25ms, even more preferably at least 35ms.

Thanks to this embodiment, it is possible to prevent a short variation from activating the system.

In some embodiments, the sensor may comprise a lightning sensor.

Thanks to this embodiment, it is possible to disconnect the industrial machine in the presence of lightning in the vicinity.

In some embodiments, not part of the present invention, the sensor may comprise a flow rate sensor and/or a pressure sensor configured so as to measure at least one value, between flow rate and pressure, of a water duct connected between a water source and the industrial machine.

Thanks to this embodiment, it is possible to avoid any problem to the machine in the presence of abnormal consumption of the water resources.

In some embodiments, not part of the present invention, the controller can be configured in such a way as to record the value measured by the flow rate sensor and/or the pressure sensor with a predetermined sampling frequency and for a predetermined time interval, and the controller can be configured in such a way as to identify a low value and a high value among the recorded values, and the controller can be configured so as to change the status of the cutout element if the value measured by the flow rate sensor and/or the pressure sensor exceeds the high value and/or is lower than the low value, preferably at least for a predetermined time interval.

Thanks to this embodiment, it is possible to evaluate the presence of any abnormal situation based on the past data related to water consumption.

### BRIEF LIST OF THE DRAWINGS

Further characteristics and advantages of the invention are highlighted in the following detailed description of preferred but non-exclusive embodiments, illustrated by way of non-limiting example with the aid of the attached drawings. In the drawings, the same reference numbers indicate the same components.

In particular:
- Figure 1A shows a schematic view of a safety device 1000 according to an embodiment;
- Figure 1B schematically shows the trend of a value measured by a sensor of a safety device according to different embodiments;
- Figure 2 shows a schematic view of a safety device 2000 according to an embodiment;
- Figure 3 shows a schematic view of a safety device 3000 according to an embodiment;
- Figure 4 shows a schematic view of a safety device 4000 according to an embodiment;
- Figure 5 shows a schematic view of a safety device 5000 according to an embodiment.

### DETAILED DESCRIPTION OF SOME EMBODIMENTS

In the following detailed description several embodiments are illustrated making reference to the figures. It is clear, however, that the present invention is not limited to the embodiments illustrated and/or described herein, but is defined by the appended claims.

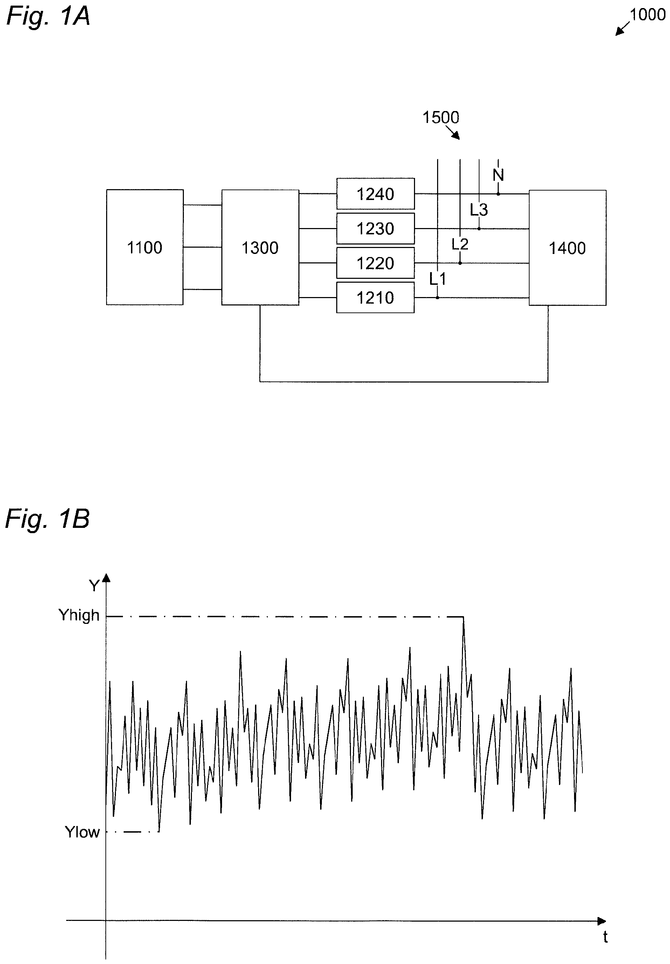

As can be seen in Figure 1A, a safety device 1000 according to an embodiment comprises at least one sensor, in this specific case four sensors 1210, 1220, 1230 and 1240, configured in such a way that it detects the presence of an abnormal situation for an industrial machine 1100. The industrial machine can be of any type, for example a press, a machining centre, a stretching machine, an industrial robot, etc. It is clear that the invention can be applied also to more than one single machine 1100. In other words, several machines 1100 and/or industrial systems may be connected to a single safety device 1000.

Even if four sensors 1210, 1220, 1230 and 1240 are shown, the present invention is not limited to this implementation and one, two, three or more sensors can be provided. In particular, as described below, an object of the sensors is to detect the presence of abnormal situations in relation to the industrial machine 1100. It is clear that one sensor is sufficient to obtain this result.

The safety device 1000 furthermore comprises at least one cutout element 1300, interposed between a power source 1500 and the industrial machine 1100. The cutout element 1300 can be, for example, a switch, a relay or any element capable of disconnecting the industrial machine 1100 from the power source 1500.

The power source 1500 is represented herein as a three-phase source with three electrical conductors L1, L2 and L3 and a neutral N. However, the invention is not limited to this embodiment and it can also be implemented in the case where the source has two connectors, for example L1 and N. It will also be clear that, even if not clearly shown, an earthing connection can be present in the controller 1400 and/or in the sensors 1210, 1220, 1230 and/or in the machine 1100 and/or in the cutout element 1300.

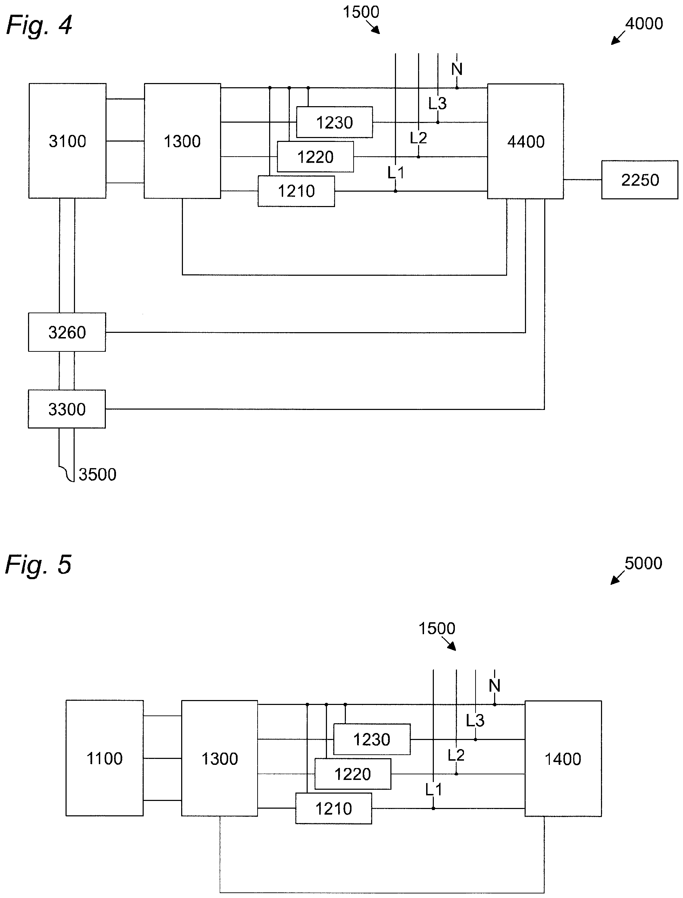

A further possible specific implementation, to be understood as a specific implementation of the safety device 1000, is illustrated in Figure 5. In particular, as shown in Figure 5, a safety device 5000 may comprise three sensors 1210, 1220 and 1230, each connected to an electrical conductor L1, L2, L3 and also to the neutral N, respectively.

The safety device 1000 comprises also at least one controller 1400, connected to the sensors 1210, 1220, 1230, 1240 and to the cutout element 1300. The controller 1400 is configured in such a way as to change the status of the cutout element 1300 based on the presence of an abnormal situation detected by one of the sensors 1210, 1220, 1230, 1240. More specifically, in the moment when the sensor detects the presence of an abnormal situation, the controller 1400 sends a disconnection signal, or a circuit opening signal, to the cutout element 1300.

In the embodiment illustrated in Figure 1A, each one of the sensors 1210, 1220, 1230, 1240 is an electrical sensor configured in such a way that it measures at least one value Y, among voltage, current and phase between voltage and current, of the respective electrical conductor L1, L2, L3 connected between the power source 1500 and the industrial machine 1100. Thus, the electrical sensor can be, for example, a voltmeter and/or an amperometer and/or a phase meter. The value Y can be measured between each phase L1, L2, L3 and each phase L1, L2, L3 or between each phase L1, L2, L3 and the neutral N. Furthermore, the value Y can be any value among voltage, current and/or phase difference. Furthermore, the value Y can be an instant value or a value of variation over time, for example the difference between an instant value at a time instant T1 and at a time instant T2. The difference between instant T1 and instant T2, in some embodiments, is included between 0 and 50 ms, preferably between 0 and 20 ms, even more preferably between 0 and 10 ms.

In some embodiments, the controller 1400 is configured in such a way that it records the value Y measured by one or more sensors 1210, 1220, 1230, 1240 with a predetermined sampling frequency and for a predetermined time interval. The predetermined time interval can be, in some embodiments, at least one day, preferably at least one week, even more preferably at least two weeks. The predetermined frequency can be included between 1 and 10 minutes, preferably between 10 and 60 seconds, even more preferably between 1 and 10 seconds. The controller 1400 is configured in such a way as to identify a low value Ylow and a high value Yhigh among the recorded values.

Furthermore, the controller 1400 is configured in such a way as to change the status of the cutout element 1300 if the value Y measured by at least one electrical sensor 1210, 1220, 1230, 1240 exceeds the high value Yhigh and/or is lower than the low value Ylow, preferably at least for a second predetermined time interval. In some embodiments, the second predetermined time interval can be of at least 10ms, preferably at least 25ms, even more preferably at least 35ms. Alternatively, or in addition to the above, the controller 1400 can be configured in such a way as to change the status of the cutout element 1300 if a variation of the value Y measured by the electrical sensor 1210, 1220, 1230, 1240 exceeds a maximum variation measured during the predetermined time interval.

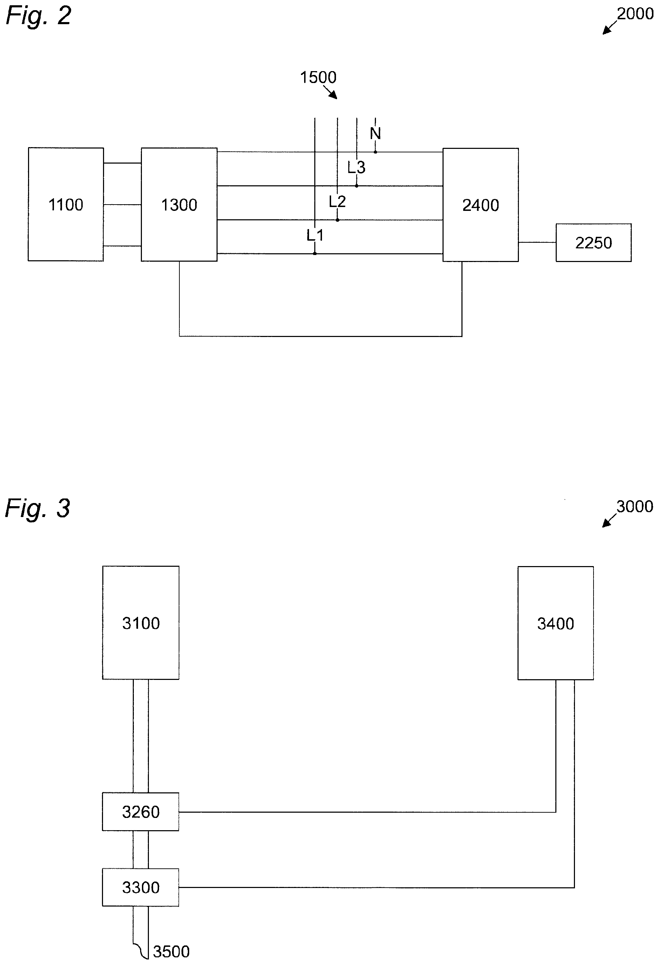

Figure 2 shows a schematic view of a device 2000 comprising a lightning sensor 2250 connected to the controller 1400. In this embodiment, the lightning sensor 2250 is configured in such a way as to detect the presence of lightning within a predetermined range and to disconnect the machine 1100 from the power source 1500, if the presence of lightning is actually detected.

In some embodiments, the predetermined range can be at least 20km, preferably at least 30km, even more preferably at least 40km.

Figure 3 shows a schematic view of a device 3000 comprising a flow rate and/or pressure sensor 3260 configured in such a way as to measure at least one value Y, between flow rate and pressure, of a water duct connected between the water source 3500 and the industrial machine 3100. The flow rate and/or pressure sensor 3260 can measure the flow rate and/or the pressure.

The controller 3400 is configured in such a way that it records the value Y measured by the flow rate and/or pressure sensor 3260 with a predetermined sampling frequency and for a predetermined time interval.

Also in this case, the controller 3400 is configured in such a way that it identifies a low value Ylow and a high value Yhigh among the recorded values, and furthermore it is configured in such a way that it changes the status of the cutout element 3300 if the value Y measured by the flow rate and/or pressure sensor 3260 exceeds the high value Yhigh and/or is lower than the low value Ylow, preferably for at least a predetermined time interval.

Figure 4 shows a schematic view of a safety device 4000 corresponding to the combination of the safety devices 1000, 2000 and 3000. It will be clear that, even if the safety device 4000 has been illustrated based on the safety device 1000, it will be possible to construct it on the basis of the safety device 5000.

## Claims

1. Safety device (1000, 2000, 3000, 4000, 5000) for industrial machinery (1100, 3100), comprising:
- at least one sensor (1210, 1220, 1230, 1240, 2250, 3260) configured so as to detect the presence of an abnormal situation for the industrial machine (1100, 3100);
- at least one cutout element (1300, 3300) interposed between a power source (1500) or a water source (3500) and at least one industrial machine (1100, 3100);
- at least one controller (1400, 3400) connected to the sensor (1210, 1220, 1230, 1240, 2250, 3260) and to the cutout element (1300, 3300) and configured so as to change the status of the cutout element (1300, 3300) based on the detection of the presence of an abnormal situation by the sensor (1210, 1220, 1230, 1240, 2250, 3260),
wherein the sensor (1210, 1220, 1230, 1240) comprises an electrical sensor (1210, 1220, 1230, 1240) configured so as to measure at least one value (Y), among voltage, current and phase between voltage and current, of an electrical conductor (L1, L2, L3, N) connected between a power source (1500) and the at least one industrial machine (1100, 3100);
**characterized in that**
the controller (1400, 3400) is configured so as to record the value (Y) measured by the electrical sensor (1210, 1220, 1230, 1240) with a predetermined sampling frequency and for a predetermined time interval of at least one day;
**wherein** the controller (1400, 3400) is configured so as to identify a low value (Ylow) and a high value (Yhigh) among the recorded values,
**wherein** the low value (Ylow) is defined as the lowest value measured during the predetermined time interval, preferably reduced by 10%, and/or
**wherein** the high value (Yhigh) is defined as the highest value measured during the predetermined time interval, preferably increased by 10%,
and **wherein** the controller (1400, 3400) is configured so as to change the status of the cutout element (1300, 3300) if the value (Y) measured by the electrical sensor (1210, 1220, 1230, 1240) exceeds the high value (Yhigh) and/or is lower than the low value (Ylow), preferably at least for a second predetermined time interval;
or **wherein** the controller (1400, 3400) is configured so as to change the status of the cutout element (1300, 3300) if a variation in the value (Y) measured by the electrical sensor (1210, 1220, 1230, 1240) exceeds a maximum variation measured during the predetermined time interval.

## Patentansprüche

1. Sicherheitsvorrichtung (1000, 2000, 3000, 4000, 5000) für Industriemaschinen (1100, 3100), umfassend:
- mindestens einen Sensor (1210, 1220, 1230, 1240, 2250, 3260), der so konfiguriert ist, dass er das Vorhandensein einer anormalen Situation für die Industriemaschine (1100, 3100) erkennt;
- mindestens ein Abschaltelement (1300, 3300), das zwischen einem Netzteil (1500) oder einer Wasserquelle (3500) und mindestens einer Industriemaschine (1100, 3100) angeordnet ist;
- mindestens ein Steuergerät (1400, 3400), das mit dem Sensor (1210, 1220, 1230, 1240, 2250, 3260) und dem Abschaltelement (1300, 3300) verbunden und so konfiguriert ist, dass es den Status des Abschaltelements (1300, 3300) auf der Grundlage der Erfassung des Vorliegens einer anormalen Situation durch den Sensor (1210, 1220, 1230, 1240, 2250, 3260) ändert,
wobei der Sensor (1210, 1220, 1230, 1240) einen elektrischen Sensor (1210, 1220, 1230, 1240) umfasst, der so konfiguriert ist, dass er mindestens einen Wert (Y) aus Spannung, Strom und Phase zwischen Spannung und Strom eines elektrischen Leiters (L1, L2, L3, N) misst, der zwischen einem Netzteil (1500) und der mindestens einen Industriemaschine (1100, 3100) angeschlossen ist;
**dadurch gekennzeichnet, dass**
das Steuergerät (1400, 3400) so konfiguriert ist, dass es den von dem elektrischen Sensor (1210, 1220, 1230, 1240) gemessenen Wert (Y) mit einer vorgegebenen Abtastfrequenz und für ein vorgegebenes Zeitintervall von mindestens einem Tag aufzeichnet;
**wobei** das Steuergerät (1400, 3400) so konfiguriert ist, dass es einen niedrigen Wert (Ylow) und einen hohen Wert (Yhigh) unter den aufgezeichneten Werten identifiziert,
**wobei** der niedrige Wert (Ylow) definiert ist als der niedrigste Wert, der während des vorbestimmten Zeitintervalls gemessen wurde, vorzugsweise reduziert um 10 %, und/oder
**wobei** der hohe Wert (Yhigh) definiert ist als der höchste Wert, der während des vorbestimmten Zeitintervalls gemessen wurde, vorzugsweise erhöht um 10 %,
und **wobei** das Steuergerät (1400, 3400) so konfiguriert ist, dass es den Status des Abschaltelements (1300, 3300) ändert, wenn der von dem elektrischen Sensor (1210, 1220, 1230, 1240) gemessene Wert (Y) den hohen Wert (Yhigh) überschreitet und/oder niedriger ist als der niedrige Wert (Ylow), vorzugsweise mindestens für ein zweites vorbestimmtes Zeitintervall;
oder **wobei** das Steuergerät (1400, 3400) so konfiguriert ist, dass es den Status des Abschaltelements (1300, 3300) ändert, wenn eine Änderung des von dem elektrischen Sensor (1210, 1220, 1230, 1240) gemessenen Wertes (Y) eine während des vorbestimmten Zeitintervalls gemessene maximale Änderung überschreitet.

## Revendications

1. Dispositif de sécurité (1000, 2000, 3000, 4000, 5000) pour machines industrielles (1100, 3100), comprenant :
- au moins un capteur (1210, 1220, 1230, 1240, 2250, 3260) configuré de manière à détecter la présence d'une situation anormale pour la machine industrielle (1100, 3100) ;
- au moins un élément de découpe (1300, 3300) interposé entre une source d'énergie (1500) ou une source d'eau (3500) et au moins une machine industrielle (1100, 3100) ;
- au moins un contrôleur (1400, 3400) connecté au capteur (1210, 1220, 1230, 1240, 2250, 3260) et à l'élément de découpe (1300, 3300) et configuré de manière à modifier l'état de l'élément de découpe (1300, 3300) sur la base de la détection de la présence d'une situation anormale par le capteur (1210, 1220, 1230, 1240, 2250, 3260),
dans lequel le capteur (1210, 1220, 1230, 1240) comprend un capteur électrique (1210, 1220, 1230, 1240) configuré de manière à mesurer au moins une valeur (Y), parmi la tension, le courant et la phase entre la tension et le courant, d'un conducteur électrique (L1, L2, L3, N) connecté entre une source d'énergie (1500) et l'au moins une machine industrielle (1100, 3100) ;
**caractérisé en ce que**
le contrôleur (1400, 3400) est configuré pour enregistrer la valeur (Y) mesurée par le capteur électrique (1210, 1220, 1230, 1240) à une fréquence d'échantillonnage prédéterminée et pour un intervalle de temps prédéterminé d'au moins un jour ;
**dans lequel** le contrôleur (1400, 3400) est configuré de manière à identifier une valeur faible (Ylow) et une valeur élevée (Yhigh) parmi les valeurs enregistrées,
**dans lequel** la valeur basse (Ylow) est définie comme la valeur la plus basse mesurée pendant l'intervalle de temps prédéterminé, de préférence réduite de 10 %, et/ou
**dans lequel** la valeur élevée (Yhigh) est définie comme la valeur la plus élevée mesurée pendant l'intervalle de temps prédéterminé, de préférence augmentée de 10 %,
et **dans lequel** le contrôleur (1400, 3400) est configuré de manière à changer l'état de l'élément de découpe (1300, 3300) si la valeur (Y) mesurée par le capteur électrique (1210, 1220, 1230, 1240) dépasse la valeur élevée (Yhigh) et/ou est inférieure à la valeur basse (Ylow), de préférence au moins pour un second intervalle de temps prédéterminé ;
ou **dans lequel** le contrôleur (1400, 3400) est configuré de manière à changer l'état de l'élément de découpe (1300, 3300) si une variation de la valeur (Y) mesurée par le capteur électrique (1210, 1220, 1230, 1240) dépasse une variation maximale mesurée pendant l'intervalle de temps prédéterminé.
